(19) Europäisches Patentamt
European Patent Office
Office européen des brevets

(11) EP 0 962 140 A1

(12) EUROPEAN PATENT APPLICATION

(43) Date of publication:
08.12.1999 Bulletin 1999/49

(51) Int. Cl.$^6$: A01N 53/06

(21) Application number: 99109259.4

(22) Date of filing: 26.05.1999

(84) Designated Contracting States:
AT BE CH CY DE DK ES FI FR GB GR IE IT LI LU MC NL PT SE
Designated Extension States:
AL LT LV MK RO SI

(30) Priority: 28.05.1998 JP 14742398

(71) Applicant:
Sumitomo Chemical Company, Limited
Chuo-ku Osaka 541-8550 (JP)

(72) Inventor: Sugano, Masayo
Osaka-shi, Osaka (JP)

(74) Representative:
VOSSIUS & PARTNER
Siebertstrasse 4
81675 München (DE)

# (54) Fabric protectants against pests

(57) Fabric protectants are provided that efficaciously control pests that have a partiality of consuming fabric materials (e.g., certain moths). By providing for 2,3,5,6-tetrafluoro-4-methylbenzyl 3-(2-chloro-2-fluorovinyl)-2,2-dimethylcyclopropanecarboxylate, or an isomer thereof, as an active ingredient therein, a fabric protectant of the invention typically withholds the transfer of odors from the provided fabric protectant to the treated fabric material, restrains undesired alterations in the colors of fabric materials caused by the provided fabric protectant, controls said pests that have a partiality to consume such fabric materials with rapid action and provides a residual effect over such pests that are associated with fabric materials.

EP 0 962 140 A1

## Description

The instant invention relates to fabric protectants against pests, and more particularly to fabric protectants that comprise 2,3,5,6-tetrafluoro-4-methylbenzyl 3-(2-chloro-2-fluorovinyl)-2,2-dimethylcyclopropanecarboxylate as an active ingredient. Furthermore, the instant invention relates to a method of protecting fabric materials from pests that are associated with fabric materials.

Fabric protectants have been developed to control pests that are associated with fabric materials. As such, there has been a need for fabric protectants that are usually capable of effectively controlling such pests, so that the pests will not typically harm fabric materials, One effective control of pests which are associated with fabric materials, would be with rapid action, which would control said pests quickly after said fabric protectant is activated for use. In addition, a residual effect of a fabric protectant would also provide an effective control over the pests by sustaining a control over the pests for an extended amount of time.

In an attempt to effectively control such pests which are associated with fabric materials, an assortment of fabric protectants have typically contained the pest controlling compounds of paradichlorobenzene, naphthalene or camphor. However, the fabric protectants containing such pest controlling compounds have been known to fail in effectively controlling pests that are associated with fabric materials, since the odors that originate from such fabric protectants generally transfer to the treated fabric materials which said fabric protectant is aspiring to protect.

The pyrethroid compound of empenthrin has also been used to produce fabric protectants. However, under certain atypical conditions, the fabric protectants which comprise empenthrin may discharge an unpleasant odor or cause an undesired alteration in the color of certain fabric materials containing copper or copper alloy (for example, ornaments or strings of the fabric materials).

A fabric protectant of the instant invention is able to efficaciously control pests which are associated with fabric materials, In this regard, one of the advantages present in the inventive fabric protectants is that the fabric protectants of the instant invention can typically withhold the transfer of odors from the provided fabric protectant to the treated fabric material. Further, another advantage of the inventive fabric protectants is that said fabric protectants can typically control said pests which are associated with fabric materials, with rapid action. Even further, one other advantage of the inventive fabric protectants is that said fabric protectants can typically provide a residual effect over such pests which are associated with fabric materials. Even furthermore, one more advantage of the inventive fabric protectants is that the active ingredient in said fabric protectants is typically less toxic to warm blooded animals, when compared to other well known pest controlling active ingredients utilized in fabric protectants.

Accordingly, the instant invention is advantageous by providing a fabric protectant that comprises 2,3,5,6-tetrafluoro-4-methylbenzyl 3-(2-chloro-2-fluorovinyl)-2,2-dimethylcyclopropanecarboxylate as an active ingredient, and by providing a method of protecting fabric material, which utilizes such fabric protectants. Typically, the fabric protectants of the instant invention additionally comprise a carrier and are typically formulated as liquid compositions, solid compositions, aerosol compositions or vaporizing compositions.

A fabric protectant of the instant invention is usually formulated into a suitable formulation that typically comprises 2,3,5,6-tetrafluoro-4-methylbenzyl 3-(2-chloro-2-fluorovinyl)-2,2-dimethylcyclopropanecarboxylate and a suitable inert carrier, In such cases, the fabric protectants of the instant invention typically comprise the instant compound in an amount of from about 0.01% to 80% by weight, and more preferably from about 0.1% to 65% by weight, based on the total weight of the provided fabric protectant. In addition, the fabric protectants of the instant invention may utilize active isomers of the instant compound which are effective in controlling pests which are associated with fabric materials, with examples of such isomers of the instant compound including 2,3,5,6-tetrafluoro-4-methylbenzyl (1R)-trans-3-(2-chloro-2-fluorovinyl)-2,2-dimethylcyclopropanecarboxylate and 2,3,5,6-tetrafluoro-4-methylbenzyl (1RS)-trans-3-(2-chloro-2-fluorovinyl)-2,2-dimethylcyclopropanecarboxylate, A method to produce the instant compound is given in **CA-A-2006835**.

The fabric protectants of the instant invention can additionally comprise the suitable inert cater typically in an amount of from about 99.99% to 15% by weight, and preferably in an amount of from about 99.9% to 20% by weight, based on the total weight of the provided fabric protectant. The carriers which are usually utilized in the fabric protectants of the instant invention, are typically substances that assist the instant compound to be carried through a process or method of protecting fabric materials from pests which are associated with fabric material. As such, the carriers utilized in the inventive fabric protectants are preferably dependent on the formulation type of the inventive fabric protectants, but are not limited thereto so that such a carrier is specific for one of the formulations of the inventive fabric protectant.

Formulations of the inventive fabric protectants are usually compositions that can effectively control pests which are associated with fabric materials, from harming fabric materials. Examples of the suitable formulations of the inventive fabric protectants include liquid compositions, solid compositions, vaporizing compositions and aerosol compositions. More specifically, examples of such liquid compositions of the inventive fabric protectants include emulsifiable concentrates, flowables, suspensible concentrates, fogging agents and oil formulations; examples of such solid compositions of the inventive fabric protectants include wettable powders, dusts, granules, tablets, stick compositions, board compositions and sheet compositions; and examples of such vaporizing compositions of the instant invention include vaporizing resin compositions and vaporizing paper compositions.

In the event that the fabric protectants of the instant invention are formulated into liquid compositions, a liquid cater is usually or typically present in the liquid compositions, but such a liquid carrier is not limited to be utilized therein, Examples of the liquid carriers which may be utilized in the liquid compositions of the inventive fabric protectants include water, alcohols such as methyl alcohol and ethyl alcohol, esters such as ethyl acetate and butyl acetate, halogenated hydrocarbons such as dichloromethane, dichloroethane, trichloroethane and carbon tetrachloride, ketones such as acetone and methyl ethyl ketone, ethers such as tetrahydrofuran and dioxane, aromatic hydrocarbons such as benzene, toluene, xylene and ethylbenzene, aliphatic hydrocarbons such as hexane, kerosene, paraffin, petroleum benzine, cyclohexane and gas oils, nitriles such as acetonitrile and isobutylonitrile, ethers such as diisopropyl ether and dioxane, amide acids such as N, N-dimethylformamide, N, N-dimethylacetoamide and dimethylsulfoxide, and botanical oils such as soy bean oil and cotton seed oil, but are not limited thereto. The above-mentioned liquid carriers may also be additionally utilized to formulate the solid composition of the inventive fabric protectants.

In the event that the fabric protectants of the instant invention are formulated into solid compositions, a solid carrier is usually or typically present in the solid compositions, but such a solid carrier is not limited to be utilized therein, Examples of such solid carriers that may be contained in the solid compositions of the inventive fabric protectants include inorganic minerals such as silicon dioxide, kaolin, active carbons, bentonite, diatomaceous earth, talc, clays such as acid clay, calcium carbonate, synthetic silicon oxide hydrates, ceramics, sericites, quartz, sulfur and hydrated silicas; powders of mineral materials such as pottery dusts, and inclusion compounds such as cyclodextrin; but are not limited thereto.

A solid composition of the instant invention (such as a resin composition), may be produced by kneading an active ingredient compound of the instant invention into the carrier and then molding the same into a desired form, or similar methods readily known and understood by those of ordinary skill in the art. For example, a fabric protectant of the instant invention may be formulated into the solid composition of a sheet composition by incorporating the active compound into the appropriate solid carrier. More specifically, sheet compositions of the instant invention may be formulated by applying, impregnating, soaking, fogging, dripping or kneading one of the instant compounds into a solid carrier, such as a film, paper, cloth, unwoven textile or leather, or a mixture thereof Such sheet compositions of the instant invention may also be formulated by incorporating an active compound of the instant invention into one or more sheet components that can be used to form a sheet composition of the instant invention, and then forming the sheet compositions from said components. In this regard, examples of the sheet components that can be used to prepare a sheet composition fabric protectant of the instant invention include synthetic resins, animal fibers and inorganic fibers. Further, two or more sheet components may be utilized to produce the sheet compositions of the instant invention, with examples of such sheet compositions resulting therefrom including mixed spinning compositions and multicomponent fabric compositions. Furthermore, a sheet composition may be utilized in combination with another sheet composition of the instant invention by layering 2 or more the sheet compositions such as unwoven fabrics.

In the event that the fabric protectants of the instant invention are formulated into a vaporizing composition, then a sublimating carrier is usually or typically present in the vaporizing compositions of the inventive fabric protectants, but such a sublimating carrier is not limited to be utilized therein, Examples of such sublimating carriers that may be utilized in the fabric protectants of the instant invention include, 2,4,6-triisopropyl-1,3,5-trioxane, tricyclo[5.5.1.0] decane, acetone oxime, amylcarbamate, butylcarbamate, parabutylaldehyde, chloroacetanilide, 4-chloro-3-methylphenyl, cyclohexanone oxime, diacetoamide, dihydroxyhexane, dimethyl oxylate, dimethylquinone, furfural oxime, but are not limited thereto.

In the event the fabric protectants of the instant invention are formulated into aerosol compositions, then gas carriers, namely propellants, and the above-mentioned liquid carriers are also usually or typically present in said aerosol compositions, but such carriers are not limited to be utilized therein, Examples of such propellants that may be utilized in the fabric protectants of the instant invention include liquefied petroleum gases (LPGs), dimethylether, chlorofluorocarbons, butane gas, carbonate gas and the other agents that allow the liquid compositions to self-disperse after traveling through an opening of an otherwise sealed system.

In addition, the fabric protectants of the instant invention may optionally comprise a formulation auxiliary, if so desired. When one of the fabric protectants of the instant invention is formulated into a liquid composition, various formulation auxiliaries may be utilized in the fabric protectant being prepared, with examples of such formulation auxiliaries including sufactants, dispersing agents, emulsifiers, wetting agents, stabilizers and film-forming agents, or a mixture thereof. When surfactants are selected to be utilized in said liquid compositions, examples of the surfactants that may be utilized in the fabric protectants of the instant invention include detergents, polyoxyethylene alkyl ethers such as polyoxyethylene oleyl ether, polyoxyethylene alkylaryl ethers such as polyoxyethylene nonylphenyl ether, polyoxyethylene fatty acid esters such as polyethyleneglycol monostearates, polyoxyethyleneglycerin fatty acid esters, sorbitan fatty acid esters, polyoxyethylene sorbitan fatty acid esters, sulfate esters of higher alcohols, alkylarylsulfonate

salts such as dodecylbenzene sulfonate salt, alkylsulfate ester salts, alkylsulfonate salts, alkylphosphate salts and alkylarylether phosphate salts, or mixtures thereof Examples of film-forming agents that may be selected to be utilized in the inventive fabric protectant, when the fabric protectant is formulated into a liquid composition, include cellulose derivatives such as nitrocellulose, acetylcellulose, methylcellulose and acetylbutylcellulose, and examples of dispersing and/or sticking agents that may be utilized in the fabric protectant include polysaccharides such as caseins, gelatins, alginic acids, starch, gum arabic and cellulose derivatives, synthetic hydrophillic polymers such as carboxymethylcellulose (CMC), lignin derivatives, bentonite, polyvinyl alcohol, polyvinyl pyrrolidone and polyacrylic acid, or mixtures thereof However, the above-mentioned auxiliaries are not limited to be utilized in the liquid compositions of the instant invention, and thereby may also be added to a solid composition of the instant invention, if necessary.

In addition, the fabric protectants of the instant invention may also optionally comprise a synergist, stabilizer, bacteriocide, fungicide, an active ingredient of other fabric protectants, and/or another fabric protectant composition, spreading agent, UV light absorption agent, aroma chemical, coloring agent or antioxident, and mixtures thereof, if so desired.

In the event the synergists or stabilizers are selected to be utilized in the fabric protectants of the instant invention, the fabric protectants should comprise the synergist or stabilizer in an amount that allows the same to be effective in producing the intended result. Accordingly, when present, the effective amount of the stabilizer or synergist in the fabric protectants of the instant invention is typically an amount of from about 1/100 to 10 times the weight of the active compound in the inventive fabric protectant. Examples of synergists that may be contained in the inventive fabric protectant include piperonylbutoxide (chemical name: $\alpha$ -[2-(2-butoxyethoxy)ethoxy]-4,5-methylenedioxy-2-propyltoluene), MGK-264 (chemical name: N-(2-ethylhexyl)bicyclo[2.2.1]hept-5-en-2,3-dicarboxyimide), S-421 (chemical name: bis(2,3,3,3-tetrachloropropyl)ether), other synergists that are compatible with pyrethroids and agents in which the combined effect of both the synergist and the active compound is greater than that of a fabric protectant containing either individually. Examples of stabilizers which may be contained in the fabric protectants of the instant invention include organic acids, phenol antioxidents such as PAP (chemically: acidic isoprpyl phosphate), BHT (chemically: 2,6-di-tert-butyl-4-methylphenol), BHA (chemically: a mixture of 2-tert-butyl-4-methoxyphenol and 3- tert-butyl-4-methoxyphenol), botanical oils, mineral oils, surfactants, fatty acids or their esters, and other compounds that aid the fabric protectant to maintain an effective form.

When present, suitable bacteriocides and fungicides that may be optionally utilized in the inventive fabric protectant include Paraben (chemically: parahydroxy benzoate), PCMX (chemically: 4-chloro-3,5-dimethylphenol), thymol (chemically: 6-isopropyl-m-clarizol) and natrurally extracted fungicides such as hinokitiol,

or a mixture thereof

When present, examples of anti-oxidents that may be optionally utilized in the fabric protectants of the instant invention include butylhydroxyanisole, dibutylhydroxytoluene, tocopherol and $\gamma$-orizanole, or a mixture thereof.

Various methods may be employed to protect fabric materials from pests that are associated with fabric materials, but the methods of the instant invention typically comprise utilizing the inventive fabric protectants in a locus wherein a control of said pests is desired.

In this regard, the methods of the instant invention usually utilize the inventive fabric protectants by dispersing, fogging, applying or attaching the inventive fabric protectants, wherein the formulations of the provided fabric protectants are either diluted or undiluted. In addition, the methods of the instant invention typically utilize the inventive fabric protectants in locations where fabric materials are present or vulnerable to fabric pests. Examples of such locations usually used in said methods include containers, rooms or closets that are typically associated with fabric materials, with examples of said fabric materials including napped, creped, woven or layered paper material or unwoven cloths. Preferably, various storage utilities that are utilized with the objective to store fabric materials or clothings, such as Japanese style chests, western style chests, organizing chests, closets and containers for clothing are the locations in which the inventive fabric protectants are utilized to control said pests in the methods of the instant invention.

As such, in order to efficaciously protect fabric materials, the methods of the instant invention typically utilize the inventive fabric protectants so that the active compound in said fabric protectant is applied in an amount of from about 10 mg to 100 g per square meter which the fabric protectant intends to protect.

One example of said methods of the instant invention usually entails a utilization of a solid composition of an inventive fabric protectant in locations where fabric materials are vulnerable. More specifically, such a method of the instant invention may utilize the sheet compositions of the instant invention in said locations to control pests which are associated with fabric materials. Optionally, the sheet compositions of the inventive fabric protectants or said sheet components that produce said sheet compositions, may additionally comprise inorganic granules, which may or may not contain the active compound of the inventive fabric protectant, when employed in such a method of the instant invention. The carrier for the sheet compositions of the instant invention include synthetic resins such as polyethylene, polypropylene, nylon, vinyl polychloride, vinylidene polychloride and polyester; films, papers, cloths, unwoven textiles, leather, animal fibers and inorganic fibers, or a mixture thereof.

Another example of the inventive methods typically comprises applying a fabric protectant of the instant invention directly onto objective fabric materials which the fabric protectant is intended to protect, such as the textiles, to protect the fabric materials from said pests. In this regard, the instant fabric protectants are highly valuable in such methods, since the active compound contained therein does not have a distinctive odor.

Another example of the methods of the instant invention typically entails spreading, soaking, fogging, dripping or kneading the inventive fabric protectant into or onto the components of household containers or chambers, such as closets, to allow the fabric protectant to be preserved or contained in said components, then utilizing said components that contain said fabric protectant to produce an objective household container or chamber containing the fabric protectant, and thereafter utilizing the produced product to protect fabric materials from pests which are associated with fabric materials, by placing said fabric material in the produced product, or otherwise bringing such fabric materials in contact with such products. More specifically, the inventive fabric protectant is typically impregnated into the components of household containers or chambers, under standard, reduced or increased pressure, in combination with an additional compound that, at room temperature, generally gels and solidifies, but does not crystalize. Thereafter, said components containing such an additional compound and the fabric protectant are typically produced into said household containers or chambers and then utilized in said locations, In order to impregnate the components by use of the inventive fabric protectant and said additional compound, said additional compound may be liquefied under heat, and may either be mixed with the fabric protectant and then incorporated into the components, or said additional compound may be incorporated into the components separately from the fabric protectant, Examples of the compound which can solidify and gel, but not crystalize, all at room temperature, include acetanilide, dimethyl isophthalate, magnesium acetate, dimethyl terephthalate, maleic anhydride, lauric acid, stearyl alcohol, solid petroleum paraffin, solid animal/plant wax, sodium tetraborate (10 hydrate), sodium aluminum sulfate, magnesium sulfate (6 hydrate), 2,4,6-triisopropyl-1,3,5-trioxane, tricyclodecane, trimethylenenorbornene and disodium hydrogenphosphate (5 hydrate). Examples of the components which may be utilized in such a method to produce the household containers or chambers include cardboards, *Paulownia tomentosa,* pencil fern, *Cinnamomum camphora*, *Taxus cuspidata, Abies firma, Abies sachalinensis, Tsuga sieboldii, Dactylocladus stenostachys, Dyera costulata, Dyera lowii, Agathis alba, Agathis philippinensis, Cryptomeria japonica, Juglans sieboldiana, Fagus crenata, Quercus crispula* and *Zelkova serrata* and plastics such as vinyl chloride resin, chlorinated polyethylene, polyethylene, polypropylene and vinyl chloride-vinyl acetate copolymer, Said components in such an example of the inventive methods may also be utilized in the objective locations, without being produced into household containers or chambers.

The pests which are associated with fabric materials are generally or typically pests that have the partiality to consume fabric materials and introduce damaging features on the fabric materials, such as feeding traces or holes. Examples of such fabric pests include the following: *Tinea* such as *Tinea translucens, Tineola* such as *Tineola bisselliella* (common clothes moth), *Attagenus* such as *Attagenus unicolor* and *Attagenus piceus* (black carpet beetle), *Anthrenus* such as *Anthrenus verbasci* (varied carpet beetle), *Hofmannophila* such as *Holmannophila pseudospretella* (brown house moth), Endrosis such as *Endrosis sarcitrella* (white-shouldered house moth), *Dermestes* (hide beetles) such as *D. maculatus* (hide beetles), *D. lardarius* (larder beetle), *D. haemorrhoidalis* and *D. peruvianus*, and the like.

The fabric protectant of the instant invention may also be utilized for controlling other additional pests, such as cockroaches and ants, by also comprising other insecticides, acaricides or pest repellents, if so desired. Examples of suitable insecticides or acaricides that may be optionally utilized in the fabric protectant of the instant invention include organophosphorus compounds such as fenitrothion [O,O-dimetyl O-(3-methyl-4-nitrophenyl) phosphorothioate], fenthion [O,O-dimethyl O-(3-methyl-4-(methythio)phenyl) phosphorothioate], diazinon [O,O-diethyl O-2-. isopropyl-6-methylpyrimidin-4-yl phosphorothioate], chlorpyrifos [O,O-diethyl O-3,5,6-trichloro-2-pyridyl phosphorothioate], acephate [O,S-dimethyl acetylphosphoramidothioate], methidathion [S-2,3-dihydro-5-methoxy-2-oxo-1,3,4-thiadiazol-3-ylmethyl O,O-dimethyl phosphorodithioate], disulfoton [O,O-diethyl S-2-ethylthioethyl phosphorodithioate], DDVP [2,2-dichlorovinyl dimethyl phosphate], sulprofos [O-ethyl O-4-(methylthio)phenyl S-propyl phosphorodithioate], cyanophos [O-4-cyanophenyl O,O-dimethyl phosphorothioate], dioxabenzofos [2-methoxy-4H-1,3,2-benzodioxaphosphorin-2-sulfide], dimethoate [O,O-dimethyl S-(N-methylcarbamoylmethyl) dithiophosphate], phenthoate [ethyl 2-dimethoxyphosphinothioylthio(phenyl) acetate], malathion [diethyl (dimethoxyphosphinothioylthio) succinate], trichlorfon [dimethyl 2,2,2-trichloro-1-hydroxyethylphosphonate], azinphos-methyl [S-3,4-dihydro-4-oxo-1,2,3-benzotriazin-3-ylmethyl O,O-dimethyl phosphorodithioate], monocrotophos [dimethyl {(E)-1-methyl-2-(methylcarbamoyl)vinyl} phosphate] and ethion [O,O,O',O'-tetraethyl S,S'-methylene bis (phosphorodithioate)], carbamate compounds such as BPMC [2-sec-butylphenyl methylcarbamate], benfracarb [ethyl N- {2,3-dihydro-2,2-dimethylbenzofuran-7-yloxycarbonyl(methyl) aminothio}-N-isopropyl- β -alaninate], propoxur [2-isopropoxyphenyl N-methylcarbamate], carbosulfan [2,3-dihydro-2,2-dimethyl-7-benzo[b]furanyl N-dibuthylaminothio-N-methylcarbamate], carbaryl [1-naphthyl N-methylcarbamate], methomyl [S-methyl-N-(methylcarbamoyloxy)thioacetimidate], ethiofencarb [2-(ethylthiomethyl)phenyl methylcarbamate], aldicarb [2-methyl-2-(methylthio)propionaldehyde O-methylcarbamoyloxime], oxamyl [N,N-dimethyl-2-methylcarbamoyloxyimino-2-(methylthio)acetamide] and fenothiocarb [S-4-phenoxybuthyl-N,N-dimethylthiocarbamate], pyrethroid compounds such as 1-ethynyl-2-fluoro-2-pentenyl-d-trans-3-(2,2-dichlorovinyl)-2,2-dimethylcyclopropane carboxylate, transfluthrin [2,3,5,6-tetrafluorobenzyl (1R)-trans-3-(2,2-dichlorovinyl)-2,2-dimethylcyclopropanecarboxylate], terallethrin [(RS)-3-allyl-2-methyl-4-oxocyclopent-2-enyl 2,2,3,3-tetramethylcyclopropanecarboxylate], etofenprox [2-(4-ethoxyphenyl)-2-methylpropyl-3-phenoxybenzyl ether, fenvalerate [(RS)- α -cyano-3-phenoxybenzyl (RS)-2-(4-chlorophenyl)-3-methyl-butyrate], esfenvalerate [(S)- α - cyano-3-phenoxybenzyl (S)-2-(4-chlorophenyl)-3-methylbutyrate], fenpropathrin [(RS)- α -cyano-3-phenoxybeuzyl 2,2,3,3-tetramethylcyclopropane-carboxylate], cypermethrin [(RS)- a -cyano-3-phenoxybenzyl (1RS)-cis,trans-3-(2,2-dichlorovinyl)-2,2-dimethyl-cyclopropanecarboxylate], permethrin [3-phenoxybenzyl (1RS)-cis,trans-3-(2,2-dichlorovinyl)-2,2-dimethylcyclopropane-carboxylate], cyhalothrin [(RS)- α -cyano-3-phenoxybenzyl (Z)-(1RS)-cis-3-(2-chloro-3,3,3-trifluoroprop-1-enyl)-2,2-dimethylcyclopropanecarboxylate], deltamethrin [(S)- α -cyano-3-phenoxybenzyl (1R)-cis-3-(2,2-dibromovinyl)-2,2-dimethyl-cyclopropanecarboxylate], cycloprothrin [(RS)- α -cyano-3-phenoxybenzyl (RS)-2,2-dichloro- 1-(4-ethoxyphenyl) cyclo-propanecarboxylate], fluvalinate [α -cyano-3-phenoxybenzyl N-(2-chloro- α , α, α -trifluoro-p-tolyl)-D-valinate], bifenthrin [2-methylbiphenyl-3-ylmethyl (Z)-(1RS)-cis-3-(2-chloro-3,3,3-trifluoroprop-l-enyl)-2,2-dimethylcyclopropanecarboxylate], 2-methyl-2-(4-bromodifluoromethoxyphenyl)propyl (3-phenoxybenzyl) ether, tralomethrin [(S)- α - cyano-3-phenoxybenzyl (1R)-cis-3-(1,2,2,2-tetrabromoethyl)-2,2-dimethylcyclopropanecarboxylate], silafluofen [(4-ethoxyphenyl)-{3-(4-fluoro-3-phenoxyphenyl)propyl} dimethylsilane], d-phenothrin [3-phenoxybenzyl (1R)-cis,trans-2,2-dimethyl-3-(2-methyl-1-propenyl) cyclopropane-carboxylate], cyphenothrin [(RS)- α -cyano-3-phenoxybeuzyl (1R)-cis,trans-2,2-dimethyhyl-3-(2-methyl-1-propenyl) cyclopropanecarboxylate], d-resmethrin [5-benzyl-3-furylmethyl (1R)-cis,trans-2,2-dimethyl-3-(2-methyl-1-propenyl) cyclopropanecarboxylate], acrinathrin [(S)- α -cyano-3-phenoxybenzyl (1R,3Z)-cis-2,2-dimethyl-3-{3-oxo-3-(1,1,1,3, 3,3-hexafluoropropyloxy)propenyl}cyclopropanecarboxylate], cyfluthrin [(RS)- α -cyano-4-fluoro-3-phenoxybenzyl 3-(2,2-dichlorovinyl)-2,2-dimethylcyclopropanecarboxylate], tefluthrin [2,3,5,6-tetrafluoro-4-methylbenzyl (1 RS,3Z)-cis-3-(2-chloro-3,3,3-trifluoro- 1-propenyl)-2,2-dimethyl-cyclopropanecarboxylate], tetramethrin [3,4,5,6-tetrahydrophthalimidomethyl (1RS)-cis,trans-2,2-dimethyl-3-(2-methyl-1-propenyl)cyclopropanecarboxylate], prallethrin [(S)-2-methyl-4-oxo-3-(2-propynyl)-2-cyclopenten-1-yl (1R)-cis,trans-2,2-dimethyl-3-(2-methyl-1-propenyl)cyclopropanecarboxylate], imiprothrin [2,5-dioxo-3-(2-propynyl)imidazolidin-1-ylmethyl (1R)-cis,trans-2,2-dimethyl-3-(2-methyl-1-propenyl) cyclopropanecarboxylate] and d-furamethrin [5-(2-propynyl) furfuryl (1R)-cis,trans-2,2-dimethyl-3-(2-methyl-1-propenyl) cyclopropanecarboxylate]; thiadiazine derivatives such as buprofezin [2-tert-butylimino-3-isopropyl-5-phenyl- 1,3,5-thiadiazin-4-one]; nitroimidazolidine derivatives; nereistoxin derivatives such as cartap [S,S'-(2-dimethylaminotrimethylene)bis(thiocarbamate)], thiocyclam [N,N-dimethyl-1,2,3-trithian-5-ylamine], bensultap [S,S'-2-dimethylaminotrimethyknedi(benzenesulfonate)]; N-cyanoamidine derivatives such as N-cyano-N'-methyl-N'-(6-chloro-3-pyridylmethyl)acetamidine; chlorinated hydrocarbons such as endosulfan [6,7,8,9,10,10-hexachloro-1 ,5,5a,6,9,9a-hexahydro-6,9-methano-2,4,3-benzodioxathiepine oxide], γ -BHC [1,2,3,4,5,6-hexachiorocyclohexane] and dicofol [1,1-bis (chlorophenyl)-2,2,2-trichloroethanol]; benzoylphenylurea compounds such as chioffluazuron [1-{3,5-dichloro-4-(3-chloro-5-trifluoromethylpyridyn-2-yloxy)phenyl}-3 -(2,6-difluorobenzoyl)urea], teflubenzuron [1-(3,5-dichloro-2,4-difluorophenyl)-3-(2,6-difluorobenzoyl)urea] and flufenoxuron [1-{4-(2-chloro-4-trifluoromethylphenoxy)-2-fluorophenyl}-3-(2,6-difluorobenzoyl)urea]; formamidine derivatives such as amitraz [N,N'-{(methylimino)dimethylidine} -di-2,4-xylidine] and chlordimeform [N'-(4-chloro-2-methylphenyl)-N,N-dimethylmethanimidamide]; thiourea derivatives such as diafenthiuron [N-(2,6-diisopropyl-4-phenoxyphenyl)-N'-t-butylcarbodiimide]; N-phenylpyrazole compounds, metoxadiazone [5-methoxy-3-(2-methoxyphenyl)-1,3,4-oxadiazol-2-(3H)-one], bromopropylate [isopropyl 4,4'-dibromobenzilate], tetradifon [4-chlorophenyl 2,4,5-trichlorophenyl sulfone], chinomethionat [S,S-6-methylquinoxaline-2,3-diyldithiocarbonate], propargite [2-(4-tert-butylphenoxy)cyclohexylprop-2-yl sulfite], fenbutatin oxide [bis{tris(2-methyl-2-phenylpropyl)tin} oxide], hexythiazox [(4RS,5RS)-5-(4-chlorophenyl)-N-chlorohexyl-4-methyl-2-oxo-1 ,3-thiazolidine-3-carboxamide], clofentezine [3,6-bis(2-chlorophenyl)-1,2,4,5-tetrazine], pyridaben [2-tert-butyl-5-(4-tert-butylbenzylthio)-4-chloropyridazin-3(2H)-one], fenpyroximate [tert-butyl (E)-4-[(1 ,3-dimethyl-5-phenoxypyrazol-4-yl)methyleneaminooxymethyl]benzoate], tebufenpyrad [N-(4-tert-butylbenzyl)-4-chloro-3-ethyl-1-methyl-5-pyrazolecarboxamide), polynactins complex [tetranactin, dinactin and trinactin], pyrimidifen [5-chloro-N-[2-{4-(2-ethoxyethyl)-2,3-dimethylphenoxy}ethyl]-6-ethylpyrimidin-4-amine], milbemectin, abamectin, ivermectin and azadirachtin [AZAD], or a mixture thereof.

Examples of the pest repellents that may be optionally utilized in the fabric protectant of the instant invention include 3,4-caranediol, N,N-diethyl-m-toluamide, 1 -methylpropyl 2-(2-hydroxyethyl)-1 -piperidinecarboxylate, p-metnthane-3,8-diol, 2,3,4,5-bis(Δ2-butylene)tetrahydrofurfural, di-n-propylisocinchomeronate, di-n-butylsuccinate, 2-hydroxyoctylsulfide, (N-carbo-sec-butyloxy)-2-(2'-hydroxyethyl)piperidine and botanical essential oils such as hyssop oil, horseradish oil, bay oil, angelica oil, fennel oil, basil oil, star anise oil, calamus oil, oregeno oil, sandalwood oil, milfoil oil, perilla oil, valerian oil, ginger oil, palmarosa oil, cinnamon oil, ylang-ylang oil and clove bud oil, or a mixture thereof.

## Examples

Hereinafter, the instant invention is explained in further detail according to the examples, but the instant invention is not limited to thereto.

Formulation Example 1

In order to produce an inventive fabric protectant sheet containing 3 layers, a mixture containing 2,3,5,6-tetrafluoro-4-methylbenzyl (1R)-trans-3-(2chloro-2-fluorovinyl)-2,2-dimethylcyclopropanecarboxylate (hereinafter referred to as Compound 1) and butylhydroxyanisole at a ratio of 5:1, on a weight to weight basis, is spread on an unwoven cloth surface, which has a 80 μm thick polyethylene laminate on the contrary surface. Said mixture is spread on the unwoven surface in an amount such that a concentration of 5g of said mixture per square meter of the unwoven surface is present.

Formulation Example 2

A solution which has Compound 1 dissolved in acetone, is spread onto a 0.9 $m^2$ Japanese wrapping paper, so that Compound 1 in said solution is spread to about 2g per square meter of said wrapping paper. The Japanese wrapping paper is then allowed to dry, to obtain a fabric protectant sheet for a tray of a Japanese chest.

Formulation Example 3

A solution which has Compound 1 dissolved in acetone, is spread onto a pulp sheet which has a diameter of 100mm and a thickness of 3mm, so that Compound 1 in said solution is spread to about 3 mg per square centimeter of said pulp sheet. The pulp sheet is then allowed to dry to obtain an inventive fabric protectant mat.

Formulation Example 4

A composition comprising 1 part of Compound 1, 1 part of silicon dioxide and 98 parts of cyclododecane, on a weight to weight basis, is sufficiently pulverized and mixed. Subsequently, the mixture containing the Compound 1 is then molded under 300kg/$cm^2$ of pressure to obtain a 10g tablet composition of the inventive fabric protectant.

Formulation Example 5

A dichloromethane solution comprising 10 % by weight of Compound 1 is applied to a cardboard surface which has, on the contrary surface, a 20 μm thick laminate comprising a vinylidene cloride coated film of nylon and polyethylene. After removing the excess of said solution off the cardboard surface, a 500 x 800 x 200mm pest controlling clothes box that has a top is obtained.

Test Example 1

A 2cm x 2cm piece of muslin wool and 10 mid-instar webbing clothes moth larvae (*Tineola bisselliella*) were placed in a polyethylene cup, wherein said cup had a closed (or bottom) area possessing a diameter of about 10cm, an opened (or top) area possessing a diameter of about 12.5cm, a vertical height of about 9.5cm and a volume of about 950$cm^3$. A compound, which is selected from the list of compounds set forth in Table 1 or 2, is then applied to a 2cm x 2cm filter paper, in an amount that is according to that of the provided compound in Table 1 or 2. Said filter paper comprising such a compound was hung from the top area of the cup and the cup was subsequently sealed. After incubating the cup at a temperature of 25°C for 1 week, the cup was unsealed so that the mortality rate of the webbing clothes moth larvae and the degree of feed on the muslin wool, which resulted from said larvae, was able to be examined.

Further, controls were tested in a similar manner as above, but differed from the above by not having any compound applied to the 2cm x 2cm filter paper.

Each Compound listed in Table 1 or 2 was tested twice.

The results of the mortality rate and the scores concerning the degree of feed are given in Table 1 and 2.

A scoring standard for the examined degree of the feeding was as follows: a "++++" score was given to a piece of muslin wool which exhibited a particular amount of feeding from said larvae, a "+++" score was given to a piece of muslin wool which exhibited an average amount of feeding from said larvae, a "++" score was given to a piece of muslin wool which exhibited a minor amount of feeding from said larvae, a "+" score was given to a piece of muslin which exhibited a most inferior amount of feeding from said larvae, and a "-" score was given to a piece of muslin wool which exhibited no feeding from said larvae.

Table 1

| Compound | Amount of Application (μg) | Average Mortality Rate (%) | Degree of Feed |
|---|---|---|---|
| Compound 1 | 6.25 | 100 | - |
| Compound A | 6.25 | 60 | ++++ |
| Compound B | 6.25 | 5 | ++++ |
| Compound C | 6.25 | 15 | ++++ |
| Control | | 0 | ++++ |

TABLE 2

| Compound | Amount of Application (μg) | Average Mortality Rate (%) | Degree of Feed |
|---|---|---|---|
| 2,3,5,6-tetrafluoro-4-methylbenzyl (1RS)-trans-3-(2-chloro-2-fluorovinyl)-2,2-dimethylcyclopropanecarboxylate | 12.5 | 100 | + |
| Compound B | 12.5 | 5 | ++++ |
| Compound C | 12.5 | 15 | ++++ |
| Control | | 0 | ++++ |

The general formulas of Compounds A, B and C are shown in the following:

Compound A

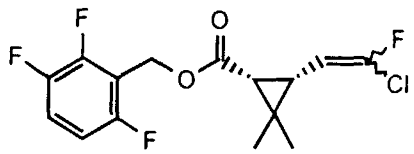

Compound B

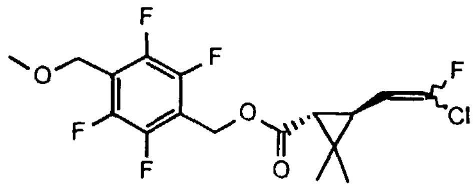

Compound C

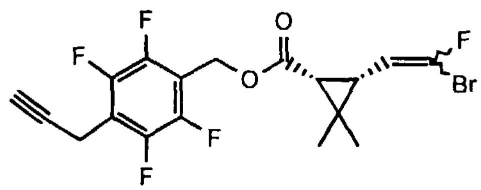

Furthermore, 1 week after the Compound 1 and 2,3,5,6-tetrafluoro-4-methylbenzyl (1RS)-trans-3-(2-chloro-2-fluorovinyl)-2,2-dimethylcyclopropanecarboxylate (hereinafter, referred to as Compound 2) were applied to their according filter paper, the filter paper was examined for the appearance of a change in color and for an odor. Said filter paper comprising either of the Compound 1 or the Compound 2 did not change color or have a noticeable odor.

Test Example 2

Two samples were obtained by spreading an acetone solution which contained 3.3mg of Compound 1 or Compound 2, onto a 2cm x 1.5cm filter paper, and then allowing the filter paper to dry.

A second filter paper, which has a diameter of 5.5mm and has a brass powder containing Cu and Zn deposited on a surface of said second filter paper, was folded so that the surface containing the brass powder faced inward. (Said second filter paper contained the brass powder in an amount that had 0.03mg of said brass powder per square centimeter of said second filter paper and so that the weight to weight ratio between the Cu and the Zn was about 78:22 to 76:24.) Subsequently, one of said samples of the 2cm x 1.5cm filter papers was interposed between the folded brass powder surfaces of said second filter paper and was secured in the interposed position by use of a clip, The achieved filter paper device was then placed into an aluminum bag and the aluminum bag containing the filter paper device was heat sealed. The heat sealed aluminum bag was then incubated at a temperature of 60°C for 48 hours. After unsealing said aluminum bag, both samples of filter papers were examined for a change in color or for an odor. Neither of the filter papers comprising Compound 1 or Compound 2, or the second filter papers had a change in color or an odor detected.

Test Example 3

Ten (10) adult webbing clothes moths (*Tineola bisselliella*) were deposited into a polyethylene cup, which had

a diameter of about 9 cm and a vertical height of about 4.5 cm. A 16 mesh nylon netting was set onto said cup in a position that was above the deposited moths and near the opened area of said cup, so that said moths would not hang in a position that would be below the opening of the cup if the cup was inverted into a position that would have the opening of said cup face downward. Subsequently, said cup was inverted so that the opening faced downward and was placed on a 9 cm diameter aluminum plate that comprised a compound set forth in Table 3 in an according amount given in Table 3. After the cup was incubated at a temperature of 25°C for a duration of 120 minutes, the cup was removed from the aluminum plate and the mortality rate was examined 24 hours later.

Further, controls were tested in a similar manner as above, but differed from the above by utilizing an aluminum plate that did not comprise any specific compounds.

The obtained results of the mortality rate are given in Table 3.

Table 3

| | Amount of Application ($mg/m^2$) | Mortality Rate (%) |
|---|---|---|
| Compound 1 | 2.5 | 100 |
| Compound B | 2.5 | 30 |
| Compound C | 2.5 | 30 |
| Control | | 0 |

Test Example 4

A sample was prepared by applying an acetone solution that contained 125mg of Compound 1 onto a 10cm x 15cm rectangular filter paper, and then drying said filter paper. Subsequently, said sample of filter paper and 6 sets of clothes were hung within a 60cm x 50cm x 155cm vinyl locker to prepare a testing device.

Two boxes, wherein one box contained 10 to 15 webbing clothes moth eggs, and the other box contained 8 to 10 mid-instar webbing clothes moth larvae in addition to a 2cm x 2cm piece of muslin wool, were then hung on said clothes, The prepared testing device containing said 2 boxes was then incubated under a temperature of 25°C and a humidity of 60% for one week. After the week of incubation, the number of the larvae that were living, ailing or deceased, were examined so that the mortality rate can be determined. In addition, the feeding on the muslin wool by said larvae were examined and were given a score based on the standard for the examined degree of the feeding, given in Example 1.

Further, the number of the hatched, ailing and dead webbing clothes moth eggs were examined under a microscope to determine the rate of control over said eggs, by use of the following equation (Equation 1):

$$\text{Rate of Control (\%)} = \frac{(\text{number of dead eggs} + \text{number of ailing eggs}) \times 100}{(\text{number of hated eggs} + \text{number of ailing eggs})} \qquad \text{[Equation 1]}$$

Said testing device comprising the clothes and sample of filter paper, was continually incubated. After 2, 4, 8, 12, and 24 more weeks of the incubation, two more of the boxes were hung in said testing device and were tested in a manner similar to the above, so that the residual effect of a fabric protectant of the instant invention could be examined.

A control was also tested in a similar manner as above, but differed from the above by utilizing a sample of filter paper that did not contain a specific compound.

The mortality rate of the mid-instar webbing clothes moth larvae, the feeding on the muslin wool, and the control rate for webbing cloth moth eggs are given in Table 4, based on the time of incubation of the testing device, which was previous to inserting said two boxes containing the webbing clothes moth larvae or webbing clothes moth eggs.

Table 4

| | Time of the Incubation Previous to the Test | | | | | |
|---|---|---|---|---|---|---|
| Tested Compound | 0 weeks | 2 weeks | 4 weeks | 8 weeks | 12 weeks | 24 weeks |
| Compound 1 | | | | | | |
| Mortality Rate (%) | 100 | 100 | 100 | 100 | 100 | 100 |
| Degree of Feed | +++ | - | - | - | - | - |
| Rate of Control Over Said Eggs (%) | 100 | 100 | 100 | 100 | 100 | 100 |
| Control | | | | | | |
| Mortality Rate(%) | 0 | 0 | 0 | 0 | 0 | 0 |
| Degree of Feed | ++++ | ++++ | ++++ | ++++ | ++++ | ++++ |
| Rate of Control Over Said Eggs (%) | 0 | 0 | 0 | 0 | 0 | 0 |

Test Example 5

A sample was prepared by applying an acetone solution that contained 100mg of Compound 1 onto a 34cm x 58cm rectangular filter paper, and then drying said filter paper. Subsequently, said sample of filter paper and 8 sets of clothes were placed within a 427mm x 725mm x 158mm clothing container to prepare a testing device.

Subsequently, the achieved testing device was tested, by use of webbing clothes moth larvae and eggs, and in a similar manner as Test Example 6 to result in a mortality rate, degree of feeding and a control rate of the eggs as set forth in the following Table 5.

Table 5

| | Time of the Incubation Previous to the Test | | | | | |
|---|---|---|---|---|---|---|
| Tested Compound | 0 weeks | 2 weeks | 4 weeks | 8 weeks | 12 weeks | 24 weeks |
| Compound 1 | | | | | | |
| Mortality Rate (%) | 100 | 100 | 100 | 100 | 100 | 100 |
| Degree of Feed | +++ | - | - | - | - | - |
| Rate of Control Over Said Eggs (%) | 100 | 100 | 100 | 100 | 100 | 100 |
| Control | | | | | | |
| Mortality Rate (%) | 0 | 0 | 0 | 0 | 0 | 0 |
| Degree of Feed | ++++ | ++++ | ++++ | ++++ | ++++ | ++++ |
| Rate of Control Over Said Eggs (%) | 0 | 8 | 0 | 0 | 14 | 0 |

Test Example 6

The formulation achieved in Formulation Example 4 is wrapped in nonwoven fabric and is used in a locus in which a control of pests which are associated with fabric materials is desired, to thereby provide a fabric protecting effect according to the methods of the present invention.

**Claims**

**1.** A fabric protectant against pests, which comprises:

2,3,5,6-tetrafluoro-4-methylbenzyl 3-(2-chloro-2-fluorovinyl)-2,2-dimethylcyclopropanecarboxylate as an active ingredient in combination with an inert carrier.

2. A fabric protectant against pests according to claim 1, which comprises:

   2,3,5,6-tetrafluoro-4-methylbenzyl (1R)-trans-3-(2-chloro-2-fluorovinyl)-2,2-dimethylcyclopropanecarboxylate as an active ingredient in combination with an inert carrier.

3. A fabric protectant against pests according to claim 1, which comprises:

   2,3,5,6-tetrafluoro-4-methylbenzyl (1RS)-trans-3-{2-chloro-2-fluorovinyl)-2,2-dimethylcyclopropanecarboxylate as an active ingredient in combination with an inert carrier.

4. A fabric protectant against pests according to claim 1, wherein the fabric protectant is a sheet composition.

5. A method of protecting fabric materials, which comprises applying an effective amount of 2,3,5,6-tetrafluoro-4-methylbenzyl 3-(2-chloro-2-fluorovinyl)-2,2-dimethylcyclopropanecarboxylate to fabric materials or a locus where fabric materials are present.

6. A method of protecting fabric materials according to claim 5, which comprises applying an effective amount of 2,3,5,6-tetrafluoro-4-methylbenzyl (1R)-trans-3-(2-chloro-2-fluorovinyl)-2,2-dimethylcyclopropanecarboxylate to fabric materials or the locus where fabric materials are present.

7. A method of protecting fabric materials according to claim 5, which comprises applying an effective amount of 2,3,5,6-tetrafluoro-4-methylbenzyl (1RS)-trans-3-(2-chloro-2-fluorovinyl)-2,2-dimethylcyclopropanecarboxylate to fabric materials or the locus where fabric materials are present.

8. A method of controlling pests which are associated with fabric materials, which comprises applying an effective amount of 2,3,5,6-tetrafluoro-4-methylbenzyl 3-(2-chloro-2-fluorovinyl)-2,2-dimethylcyclopropanecarboxylate to fabric materials or a locus where fabric materials are present.

9. A use of 2,3,5,6-tetrafluoro-4-methylbenzyl 3-(2-chloro-2-fluorovinyl)-2,2-dimethylcyclopropanecarboxylate for a fabric protectant against pests.

European Patent Office

# EUROPEAN SEARCH REPORT

Application Number
EP 99 10 9259

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br><br><br>D | EP 0 378 026 A (ROUSSEL UCLAF)<br>18 July 1990 (1990-07-18)<br>* claims 16-19 *<br>& CA 2 006 835 A<br>--- | 1-4 | A01N53/06 |
| A | EP 0 576 270 A (SUMITOMO CHEMICAL CO)<br>29 December 1993 (1993-12-29)<br>----- | | |

TECHNICAL FIELDS SEARCHED (Int.Cl.6)
A01N

The present search report has been drawn up for all claims

| Place of search | Date of completion of the search | Examiner |
|---|---|---|
| THE HAGUE | 16 September 1999 | Decorte, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 99 10 9259

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-1999

| Patent document cited in search report | Publication date | Patent family member(s) | Publication date |
|---|---|---|---|
| EP 0378026 A | 18-07-1990 | FR 2641275 A | 06-07-1990 |
| | | AU 4707189 A | 05-07-1990 |
| | | CA 2006835 A | 29-06-1990 |
| | | CN 1044936 A | 29-08-1990 |
| | | JP 2225442 A | 07-09-1990 |
| | | MX 18761 A | 01-11-1993 |
| EP 0576270 A | 29-12-1993 | JP 6009318 A | 18-01-1994 |
| | | AU 3717293 A | 06-01-1994 |
| | | CA 2095288 A | 27-12-1993 |
| | | CN 1082320 A,B | 23-02-1994 |
| | | DE 69306180 D | 09-01-1997 |
| | | DE 69306180 T | 30-04-1997 |
| | | ES 2095011 T | 01-02-1997 |
| | | GR 3022330 T | 30-04-1997 |
| | | PL 299450 A | 05-04-1994 |
| | | TR 27262 A | 22-12-1994 |
| | | ZA 9303284 A | 22-11-1993 |

EPO FORM P0459

For more details about this annex : see Official Journal of the European Patent Office, No. 12/82